# FASCICULE DE BREVET EUROPEEN

(11) **EP 4 096 972 B1**
(45) Date de publication et mention de la délivrance du brevet: **20.03.2024**
(21) Numéro de dépôt: 21700295.5
(22) Date de dépôt: 11.01.2021
(51) Int. Cl.: B60S 1/56, B60S 1/34, B60S 1/38, B60S 1/52

(54) **ESSUYAGE POUR PETITE SURFACE**
KLEINFLÄCHIGES WISCHEN
SMALL-AREA WIPING

(30) Priorité: 28.01.2020 FR 2000820
(43) Date de publication de la demande: 07.12.2022
(73) Titulaire: Valeo Systèmes d'Essuyage, 78322 Le Mesnil Saint Denis (FR)
(72) Inventeur: IZABEL, Vincent, 78322 Le Mesnil Saint Denis (FR); JARASSON, Jean-Michel, 78322 Le Mesnil Saint Denis (FR); CAILLOT, Gérald, 78322 Le Mesnil Saint Denis (FR); GIRAUD, Frédéric, 78322 Le Mesnil Saint Denis (FR); TREBOUET, Marcel, 78322 Le Mesnil Saint Denis (FR); PASCHUTINE, Alexandre, 78322 Le Mesnil Saint Denis (FR); BELHAJ, Mehdi, 78322 Le Mesnil Saint Denis (FR)
(74) Mandataire: Valeo Visibility
(86) Numéro de dépôt international: PCT/EP2021/050412
(87) Numéro de publication internationale: WO 2021/151646

(56) Documents cités:
- JP-A- 2007 053 448
- US-A1- 2008 052 864
- US-A1- 2017 225 653
- US-A1- 2019 256 055
- US-B2- 10 479 324

## Description

### Domaine Technique de l'invention

La présente invention concerne le domaine de l'essuyage, et plus particulièrement le domaine des systèmes d'essuyage dédiés aux véhicules automobiles. Elle porte sur un système d'essuyage comprenant un arbre et un balai, et sur un arbre et un balai en tant que tels d'un tel système d'essuyage.

### Etat de la technique antérieure

Les véhicules automobiles sont couramment équipés d'un système d'essuyage comprenant au moins un balai d'essuyage d'une surface vitrée, telle que par exemple un pare-brise. Un balai d'essuyage est entraîné, via un bras, par un moteur d'entraînement entre deux positions extrêmes. Le balai d'essuyage est lié au bras par l'intermédiaire d'une liaison rotule, ce qui nécessite une connectique complexe. Ces solutions d'essuyage conviennent bien pour une surface vitrée importante, mais moins pour des petites surfaces du fait de leur encombrement, de leur coût, et de leur complexité. Or, il existe d'autres besoins d'essuyage, notamment de petites surfaces. Par exemple, dans le cadre d'un véhicule autonome, il est important de garantir l'état de surface de plusieurs caméras, et éventuellement de systèmes d'éclairage, car la sécurité de ces véhicules autonomes dépend fortement de ces dispositifs.

Les documents US 10 479 324 B2 et US 2008/052864 A1 divulguent des balais d'essuyage pour systèmes d'essuyage selon l'art antérieur.

### Présentation de l'invention

Un objet général de l'invention est de proposer une solution d'essuyage fiable et simple, notamment adaptée pour l'essuyage d'une petite surface comme celle d'une caméra pour un véhicule autonome.

### Résumé de l'invention

A cet effet, il est proposé un balai d'essuyage pour un système d'essuyage, notamment pour essuyer une caméra d'un véhicule automobile.

Selon l'invention, le balai comprend un dispositif de connexion apte à une connexion amovible avec un arbre d'entrainement du balai d'essuyage, ce dispositif de connexion comprenant une première orientation qui permet le montage et démontage relativement à un arbre d'entraînement, et une deuxième orientation qui ne permet pas ce montage et démontage.

L'utilisation d'un tel balai permet un montage et démontage rapide et facile du balai d'essuyage, sans outils, tout en assurant une fixation solide et fiable du balai d'essuyage à l'arbre d'entraînement.

Selon l'invention, le dispositif de connexion comprend en outre une ouverture au niveau d'une extrémité du balai d'essuyage, comprenant au moins deux portions élargies pour son montage et démontage.

Selon un autre mode de réalisation, le balai comprend en outre un moyen anti-rotation, notamment par au moins une protubérance au niveau d'une ouverture de son dispositif de connexion ou par une collerette comprenant au moins un logement pour coopérer avec au moins une butée d'un arbre d'entraînement.

Selon un autre mode de réalisation, le balai comprend en outre une monture formant des glissières pour la fixation amovible par translation d'un élément d'essuyage destiné à venir en contact avec la surface à essuyer.

Il est également proposé un système d'essuyage qui selon un autre aspect de l'invention comprend un arbre d'entraînement et un balai d'essuyage comme décrit ci-dessus, ledit balai étant fixé de manière amovible sur cet arbre d'entraînement.

Selon un mode de réalisation, le système comprend en outre une configuration de fonctionnement dans laquelle un moyen élastique exerce une force sur le balai d'essuyage tendant à maintenir en butée contre au moins une butée de l'arbre d'entraînement, notamment une goupille, pour verrouiller le balai d'essuyage dans cette configuration de fonctionnement. Selon un mode de réalisation le balai d'essuyage et l'arbre d'entraînement comprennent des dispositifs de connexion respectifs configurés pour permettre leur montage et/ou démontage par leur actionnement successivement selon un premier mouvement de translation relatif parallèlement à l'axe de l'arbre d'entraînement.

Selon un mode de réalisation, le balai d'essuyage et l'arbre d'entraînement comprennent des moyens anti-rotation respectifs configurés pour former un dispositif anti-rotation du balai d'essuyage relativement à l'arbre d'entraînement dans ladite configuration de fonctionnement. Avantageusement, l'arbre d'entraînement comprend une première portion avec des cannelures formant un moyen anti-rotation, et le balai d'essuyage comprend une ouverture avec des protubérances de format correspondant aux cannelures, configures pour se loger dans les cannelures dans ladite configuration de fonctionnement de système d'essuyage et former un dispositif anti-rotation.

Avantageusement, l'arbre d'entraînement comprend une goupille formant un moyen anti-rotation et une butée de verrouillage, le balai d'essuyage comprenant une collerette anti-rotation comprenant des logements configurés pour coopérer avec la goupille dans ladite configuration de fonctionnement du système d'essuyage, formant ainsi un moyen anti-rotation et un moyen de verrouillage du balai d'essuyage sur l'arbre d'entraînement.

Selon un autre mode de réalisation, le moyen élastique comprend une rondelle élastique, notamment disposée entre deux rondelles plates.

Il est également proposé un arbre d'entraînement pour un système d'essuyage, comme décrit ci-dessus.

Il est également proposé un caméra ou dispositif d'éclairage pour véhicule autonome, qui selon un autre aspect de l'invention comprend au moins un système d'essuyage comme décrit ci-dessus.

Il est également proposé un véhicule, de préférence un véhicule autonome, qui selon un autre aspect de l'invention comprend un système d'essuyage, une caméra ou un dispositif d'éclairage tel que décrit ci-dessus.

### Présentation des figures

Ces objets, caractéristiques et avantages de la présente invention seront exposés en détail dans la description suivante de modes de réalisation particuliers faits à titre non-limitatif en relation avec les figures jointes parmi lesquelles :
[Fig. 1] La figure 1 représente un système d'essuyage selon un premier mode de réalisation de l'invention.
[Fig. 2] La figure 2 représente une monture d'un balai d'essuyage du système d'essuyage selon le premier mode de réalisation de l'invention.
[Fig. 3] La figure 3 représente un balai d'essuyage du système d'essuyage selon le premier mode de réalisation de l'invention.
[Fig. 4] La figure 4 représente une vue de côté d'un arbre d'entrainement du système d'essuyage selon le premier mode de réalisation de l'invention.
[Fig. 5] La figure 5 représente une vue en perspective de l'arbre d'entrainement du système d'essuyage selon le premier mode de réalisation de l'invention.
[Fig. 6] La figure 6 représente une vue de dessus de l'arbre d'entrainement du système d'essuyage selon le premier mode de réalisation de l'invention.
[Fig. 7] La figure 7 représente une vue éclatée d'un moyen élastique du système d'essuyage selon le premier mode de réalisation de l'invention.
[Fig. 8] La figure 8 représente une vue du moyen élastique monté sur l'arbre d'entrainement du système d'essuyage selon le premier mode de réalisation de l'invention.
[Fig. 9] La figure 9 représente une autre vue du moyen élastique monté sur l'arbre d'entrainement du système d'essuyage selon le premier mode de réalisation de l'invention.
[Fig. 10] La figure 10 représente une vue de la monture du balai d'essuyage montée sur l'arbre d'entrainement du système d'essuyage selon le premier mode de réalisation de l'invention.
[Fig. 11] La figure 11 représente une autre vue de la monture du balai d'essuyage montée sur l'arbre d'entrainement du système d'essuyage selon le premier mode de réalisation de l'invention.
[Fig. 12] La figure 12 représente une vue d'une monture d'un balai d'essuyage selon une variante du premier mode de réalisation de l'invention.
[Fig. 13] La figure 13 représente une autre vue de la monture d'un balai d'essuyage selon la variante du premier mode de réalisation de l'invention.
[Fig. 14] La figure 14 représente un balai d'essuyage du système d'essuyage selon la variante du premier mode de réalisation de l'invention.
[Fig. 15] La figure 15 représente un système d'essuyage selon un deuxième mode de réalisation de l'invention.
[Fig. 16] La figure 16 représente une collerette anti-rotation du système d'essuyage selon le deuxième mode de réalisation de l'invention.
[Fig. 17] La figure 17 représente une partie du balai d'essuyage du système d'essuyage selon le deuxième mode de réalisation de l'invention.
[Fig. 18] La figure 18 représente une vue en perspective de dessus d'un balai d'essuyage du système d'essuyage selon le deuxième mode de réalisation de l'invention.
[Fig. 19] La figure 19 représente une vue en perspective de dessous d'un balai d'essuyage du système d'essuyage selon le deuxième mode de réalisation de l'invention.
[Fig. 20] La figure 20 représente une vue d'un arbre d'entrainement du système d'essuyage selon le deuxième mode de réalisation de l'invention.
[Fig. 21] La figure 21 représente une vue d'un arbre d'entrainement du système d'essuyage comprenant un moyen élastique et une collerette anti-rotation selon le deuxième mode de réalisation de l'invention.
[Fig. 22] La figure 22 représente une autre vue d'un arbre d'entrainement du système d'essuyage comprenant un moyen élastique et une collerette anti-rotation selon le deuxième mode de réalisation de l'invention.
[Fig. 23] La figure 23 représente une vue d'un système d'essuyage selon un troisième mode de réalisation de l'invention.
[Fig. 24] La figure 24 représente une vue d'un axe bas de l'arbre du système d'essuyage selon le troisième mode de réalisation de l'invention.
[Fig. 25] La figure 25 représente une vue d'un axe haut de l'arbre du système d'essuyage selon le troisième mode de réalisation de l'invention.
[Fig. 26] La figure 26 représente une vue de l'arbre du système d'essuyage selon le troisième mode de réalisation de l'invention.
[Fig. 27] La figure 27 représente une vue d'un système d'essuyage selon une variante du troisième mode de réalisation de l'invention.
[Fig. 28] La figure 28 représente une vue d'un embout d'une monture du balai d'essuyage selon la variante du troisième mode de réalisation de l'invention.
[Fig. 29] La figure 29 représente une vue d'une monture du balai d'essuyage selon la variante du troisième mode de réalisation de l'invention.
[Fig. 30] La figure 30 représente une vue des lames d'une monture du balai d'essuyage selon la variante du troisième mode de réalisation de l'invention.
[Fig. 31] La figure 31 représente une autre vue de la monture du balai d'essuyage selon la variante du troisième mode de réalisation de l'invention.
[Fig. 32] La figure 32 représente une vue du balai d'essuyage selon la variante du troisième mode de réalisation de l'invention.
[Fig. 33] La figure 33 représente une vue du balai d'essuyage sur lequel est connecté un tuyau d'alimentation selon la variante du troisième mode de réalisation de l'invention.
[Fig. 34] La figure 34 représente une autre vue d'un système d'essuyage selon la variante du troisième mode de réalisation de l'invention.
[Fig. 35] La figure 35 représente une autre vue d'un système d'essuyage selon la variante du troisième mode de réalisation de l'invention.

### Description détaillée

Pour simplifier la description, les mêmes références seront utilisées pour désigner des éléments identiques ou similaires sur les différents modes de réalisation de l'invention.

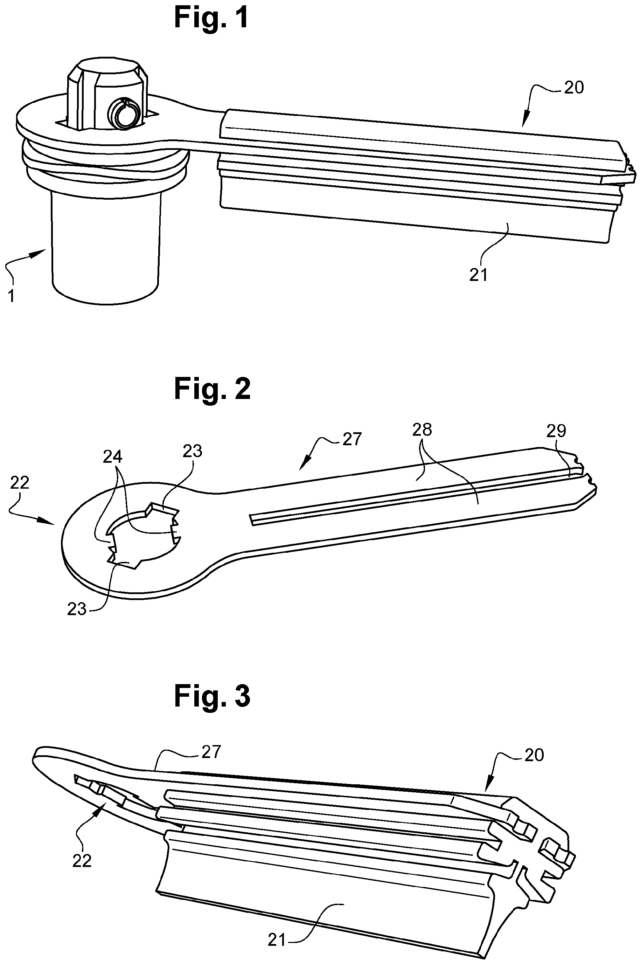

Les figures 1 à 11 illustrent un système d'essuyage selon un premier mode de réalisation de l'invention. Ce système d'essuyage comprend d'une part un arbre 1 d'entrainement, qui sera appelé aussi plus simplement arbre 1, ou bras, destiné à être entraîné en rotation sur lui-même autour de son axe longitudinal par un moteur, non représenté, et d'autre part un balai d'essuyage 20 comprenant un élément d'essuyage 21 prévu pour rester en contact avec une surface à essuyer, non représentée. Le balai d'essuyage 20 est entraîné en rotation par l'arbre 1, permettant à son élément d'essuyage 21 d'essuyer la surface. Pour faciliter l'entretien du système d'essuyage, le balai d'essuyage 20 est monté de manière amovible sur l'arbre 1, selon une solution conviviale, simple et fiable, comme cela va être détaillé par la suite.

La figure 2 représente la monture 27 du balai d'essuyage 20, qui comprend une première extrémité formant un dispositif de connexion 22, apte à coopérer avec l'arbre 1, d'où s'étendent deux lames 28 planes, rectilignes et parallèles, séparées par une fente 29, jusqu'à une deuxième extrémité du balai d'essuyage 20 opposée au dispositif de connexion 22. Ce dispositif de connexion 22 présente une forme extérieure globalement circulaire, en forme de disque, et comprend une ouverture centrale remplissant plus particulièrement la fonction de connexion. Cette ouverture présente globalement une forme circulaire, agrandie par une partie rectangulaire formant deux portions élargies 23 par rapport à l'ouverture circulaire, c'est-à-dire augmentant la dimension de l'ouverture. Entre ces deux portions élargies 23, l'ouverture comprend globalement une partie circulaire, interrompue par deux créneaux ou protubérances 24 rétrécissant l'ouverture, s'étendant vers le centre du dispositif de connexion 22. La monture 27 forme une armature rigide, de préférence en métal, du balai d'essuyage 20.

La figure 3 illustre le balai d'essuyage 20, sur lequel un élément d'essuyage 21 est montée sur la monture 27. Pour cela, l'élément d'essuyage 21 comprend des rainures latérales permettant une coopération avec les lames 28 de la monture 27. L'élément d'essuyage 21 peut ainsi être translatée en liaison glissière le long des lames 28 de la monture. L'élément d'essuyage 21 comprend aussi une extension, opposée à la monture 27, formant une lame d'essuyage destinée à un contact avec la surface à essuyer, de manière connue. En remarque, un embout, non représenté, peut éventuellement être ajouté pour bloquer l'élément d'essuyage 21 après son montage sur la monture 27.

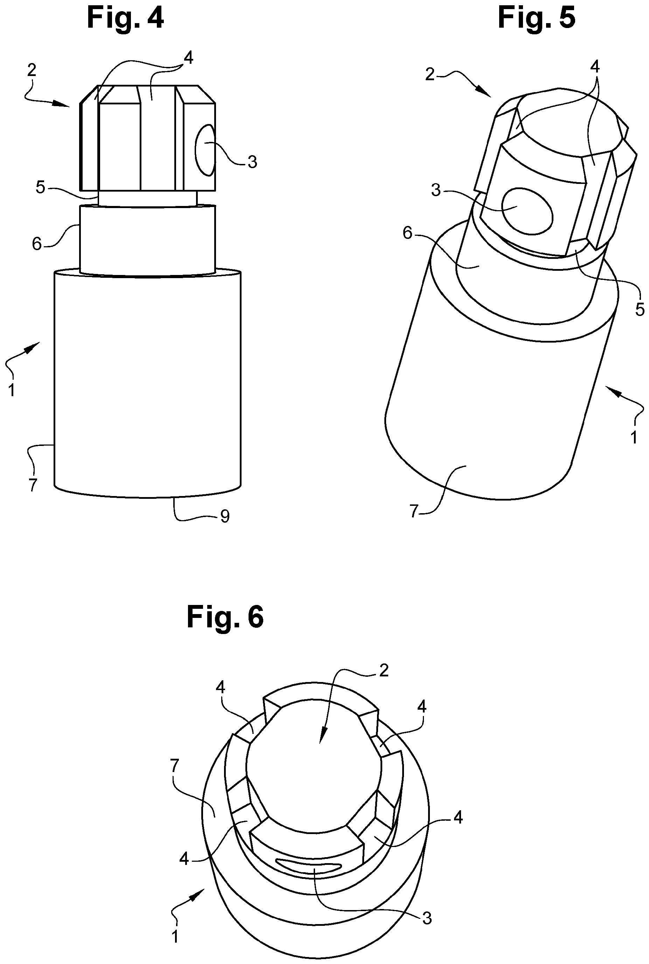

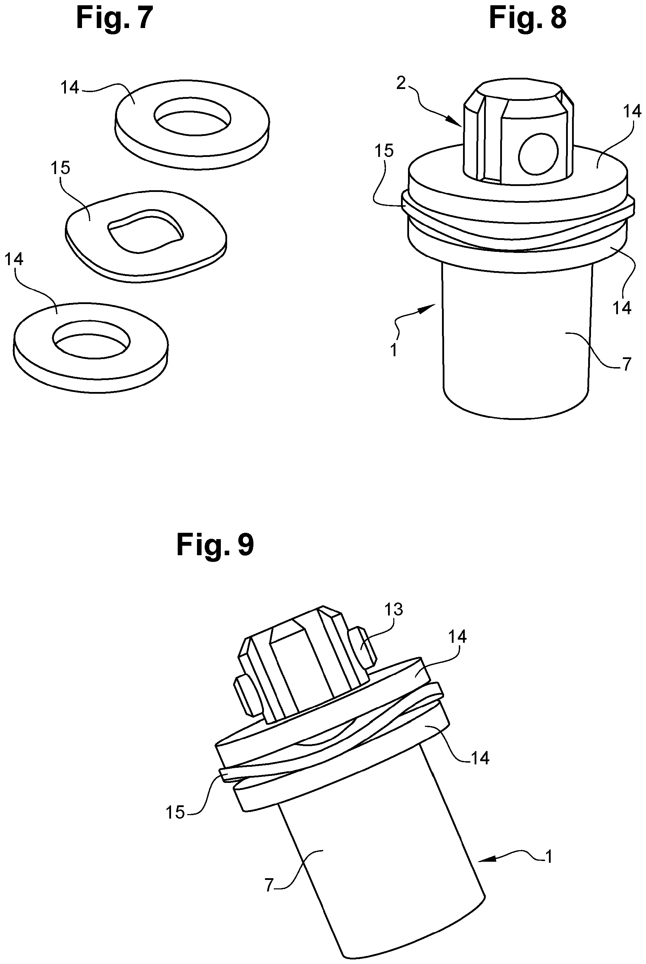

Les figures 4 à 6 représentent plus particulièrement l'arbre 1 du système d'essuyage. Il comprend une première extrémité formant un dispositif de connexion 2 destiné à coopérer avec le balai d'essuyage 20. Cette première extrémité comprend une première portion présentant des cannelures 4 s'étendant parallèlement à l'axe de l'arbre 1 sur sa périphérie. Cette extrémité comprend de plus une ouverture cylindrique 3 traversante, perpendiculaire à l'axe de l'arbre 1, destinée à recevoir une goupille 13, par exemple visible sur la figure 9.

Ensuite, l'arbre 1 comprend une deuxième portion 5 de section circulaire de diamètre réduit, correspondant sensiblement au diamètre mesuré d'une cannelure 4 à une autre de la première portion. Il comprend ensuite une troisième portion 6 de diamètre plus important que la deuxième portion, correspondant sensiblement au diamètre de la première portion en dehors des cannelures 4. Enfin, il comprend une quatrième portion 7 de diamètre encore plus important, qui s'étend jusqu'à une deuxième extrémité 9 destinée à une liaison avec un moteur d'entrainement, non représenté.

Le système d'essuyage comprend de plus un moyen élastique, représenté sur la figure 7, destiné à un montage sur l'arbre 1, pour coopérer avec le balai d'essuyage, comme cela sera précisé par la suite. Selon ce mode de réalisation, le moyen élastique comprend deux rondelles plates 14 disposées de part et d'autre d'une rondelle élastique 15, par exemple de type onduflex^{®}.

Les figures 8 et 9 représentent l'arbre 1 sur lequel le moyen élastique est monté. Il apparait qu'une première rondelle plate 14 vient reposer sur l'extrémité de la quatrième portion 7 de plus grand diamètre de l'arbre, les deux autre rondelles 14, 15 venant reposer sur cette première rondelle plate 14. La figure 9 représente de plus une goupille 13 insérée dans l'ouverture cylindrique 3 susmentionnée de l'arbre 1.

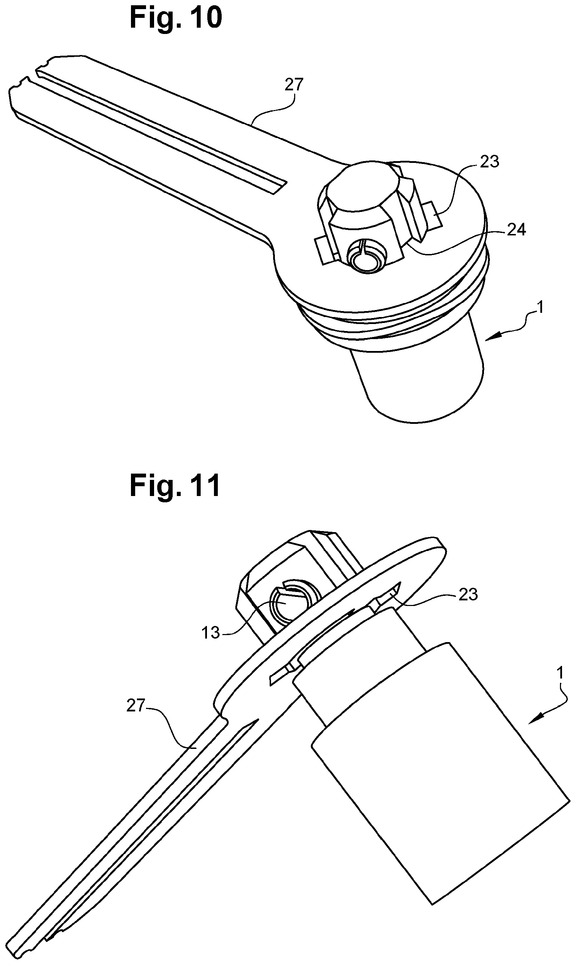

La figure 1 représente le système d'essuyage intégralement monté. Les figures 10 et 11 représentent ce système d'essuyage monté mais en retirant certains éléments pour mieux visualiser certains détails, notamment le positionnement relatif des différents éléments au niveau de leur connexion. Notamment, la figure 11 permet de visualiser le positionnement en vue de dessous de la monture 27 sur l'arbre 1.

Le fonctionnement du système d'essuyage va maintenant être détaillé, notamment le montage et démontage du balai d'essuyage 20 sur l'arbre 1.

L'assemblage du système d'essuyage comprend d'abord le montage du moyen élastique sur l'arbre 1, puis de la goupille 13 qui solidarise le tout. A ce stade, le système d'essuyage est dans l'état représenté par la figure 9. La monture 27 du balai d'essuyage est alors montée sur l'arbre 1. Son dispositif de connexion 22 est approché du dispositif de connexion 2 correspondant de l'arbre 1. Pour cela, la monture 27 est orientée de sorte que ses portions élargies 23 viennent en vis-à-vis de la goupille 13. Leurs dimensions sont prévues pour permettre le passage de la goupille 13 au travers l'ouverture formée dans le dispositif de connexion 22 de la monture, qui représente la connectique femelle de la liaison. De plus, dans cette orientation, les protubérances 24 viennent en vis-à-vis des cannelures 4 : ces formes sont prévues pour que les protubérances 24 puissent pénétrer dans les cannelures 4. Ainsi, dans cette orientation des éléments, la monture 27 peut être translatée le long de l'arbre 1. Cette translation est poursuivie jusqu'à ce que la monture 27 vienne en contact avec une rondelle plate 14 du moyen élastique. Le mouvement est alors poursuivi en comprimant le moyen élastique, plus exactement la rondelle élastique 15, jusqu'à ce que le dispositif de connexion 22 de la monture 27 atteigne la deuxième portion 5 de l'arbre 1 : dans cette position, la monture 27 est alors tournée d'un quart de tour, puis relâchée. Elle remonte automatiquement jusqu'à venir en butée contre la goupille 13, sous l'effet du moyen élastique. En position finale ou configuration de fonctionnement, particulièrement visible sur les figures 10 et 11, la monture 27 se trouve donc au niveau de la première portion de l'arbre 1, et non plus au niveau de la deuxième portion 5 de plus petit diamètre. Par cette rotation d'un quart de tour, les portions élargies 23 de l'ouverture du dispositif de connexion 22 ne se trouvent plus alignées avec la goupille 13, mais au contraire disposées perpendiculairement. Une zone de l'ouverture du dispositif de connexion 22 de plus petit diamètre se trouve alors au niveau de la goupille 13, ne permettant plus le retrait de la monture 27. D'autre part, le dispositif de connexion 2 de l'arbre 1 comprend quatre cannelures 4, uniformément réparties sur le pourtour de l'arbre 1. Ainsi, lors d'une rotation d'un quart de tour de la monture 27, les protubérances 24 du dispositif de connexion 22 de la monture 27 passent d'une cannelure 4 vers une cannelure adjacente. Ainsi, lorsque la monture remonte, ces protubérances 24 reprennent place au sein d'une cannelure 4. Cette géométrie remplit la fonction anti-rotation de la monture 27 relativement à l'arbre 1, et garantit un entrainement ultérieur fiable de la monture 27 par l'arbre 1. Enfin, la monture 27 reste en permanence sous la pression élastique du moyen élastique, en butée contre la goupille 13, ce qui forme un moyen de verrouillage. Cet agencement garantit le bon positionnement du balai d'essuyage, dont l'élément d'essuyage 21 reste ainsi en contact efficace contre la surface à essuyer.

Le démontage du balai d'essuyage est réalisé par l'opération inverse. Le balai d'essuyage est d'abord pressé, à l'encontre du moyen élastique, pour atteindre la deuxième portion 5 de l'arbre 1, qui permet sa rotation d'un quart de tour, permettant de repositionner les portions élargies 23 en alignement avec la goupille 13, autorisant alors la translation du balai d'essuyage et son retrait de l'arbre 1.

Naturellement, l'invention ne se limite pas au mode de réalisation représenté. Notamment, la forme complémentaire des dispositifs de connexion 2, 22 respectivement de l'arbre 1 et du balai d'essuyage 20 pourrait être différente de celle représentée, dès lors qu'ils permettent une première position de montage/démontage et une deuxième position de fonctionnement. D'autre part, le passage de la première position à la deuxième position pourrait se faire par une autre rotation qu'un quart de tour. Enfin, la géométrie des éléments pourrait être différente, dès lors qu'elle permet de remplir la fonction anti-rotation du balai d'essuyage relativement à l'arbre dans la deuxième position de fonctionnement. Ainsi, toute rainure, encoche, etc., pourrait être utilisée.

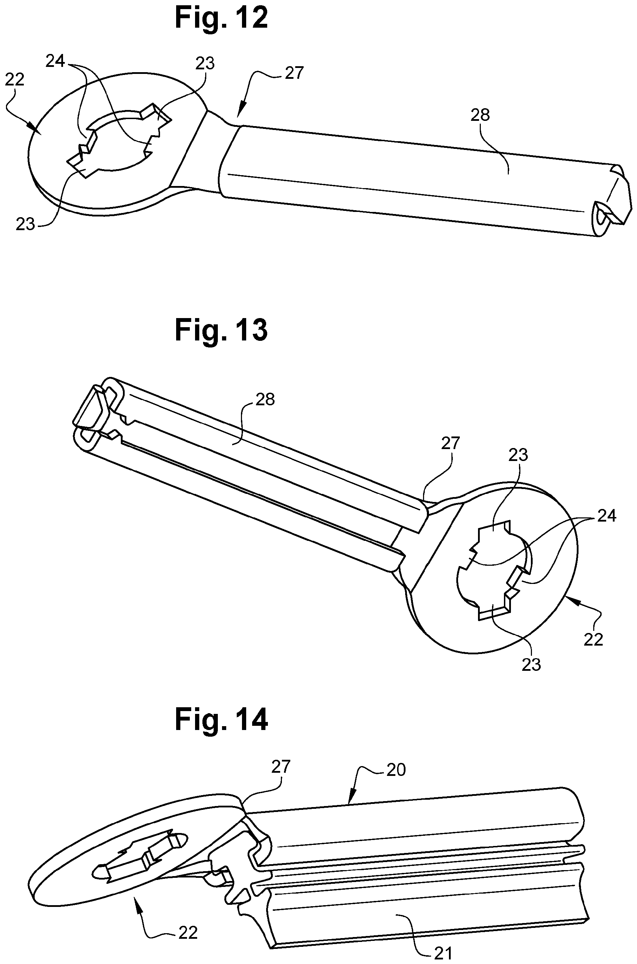

Les figures 12 à 14 illustrent une variante du premier mode de réalisation, dans laquelle le balai d'essuyage 20 diffère, l'arbre 1 restant identique. Comme cela apparaît sur les figures 12 et 13, la monture 27 du balai d'essuyage 20 présente un dispositif de connexion 22 identique à celui du mode de réalisation décrit précédemment, mais comprend une lame 28 différente, pour la réception d'un élément d'essuyage 21. La lame 28 unique présente un profil en gouttière, ouvert sur la face orientée vers la surface à essuyer. Cette forme permet à la lame 28 de présenter deux griffes inférieures de maintien. Ce profil permet l'insertion et la translation d'un élément d'essuyage 21, dont la base présente une section correspondante en I majuscule (avec deux tiges perpendiculaires aux deux extrémités du I). En remarque, un tel balai d'essuyage présente une largeur plus faible que celle du balai d'essuyage décrit précédemment, ce qui réduit la perturbation sur le fonctionnement de l'élément à essuyer, par exemple une caméra d'un véhicule automobile.

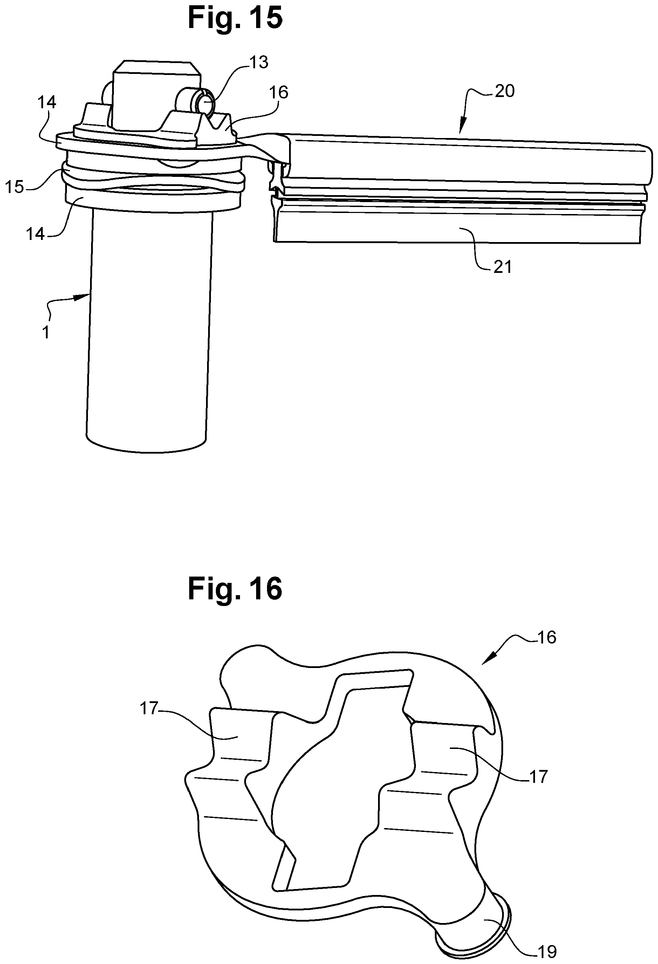

Les figures 15 à 22 illustrent un deuxième mode de réalisation de l'invention, qui diffère principalement du premier mode de réalisation en ce qu'il comprend une collerette anti-rotation 16, positionnée entre le balai d'essuyage 20 et la goupille 13, remplissant ainsi la fonction anti-rotation. Cette solution permet de simplifier la géométrie de l'arbre 1, comme cela va être décrit ci-dessous.

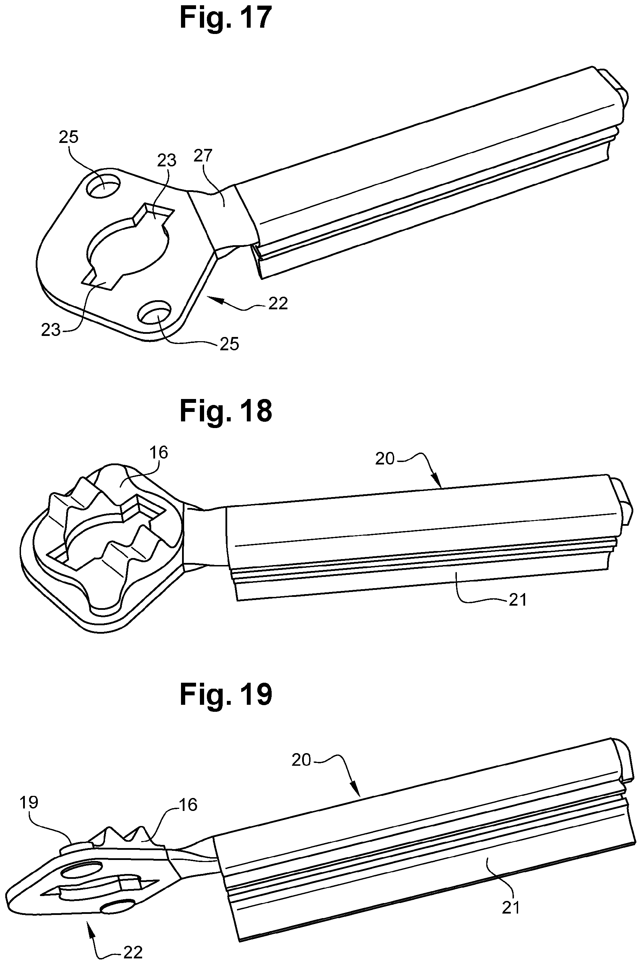

Dans ce deuxième mode de réalisation, le balai d'essuyage 20 comprend d'abord une monture 27 et un élément d'essuyage 21 identiques à ceux de la variante du premier mode de réalisation. La collerette anti-rotation 16, plus particulièrement visible sur la figure 16, est destinée à un montage sur le balai d'essuyage 20, comme représenté sur les figures 18 et 19. Elle comprend deux logements 17, de section en forme de V, alignés, de forme adaptée pour coopérer avec les deux extrémités de la goupille 13, comme cela est visible sur les figures 15, 21 et 22. Elle comprend de plus deux extensions 19 formant des éléments de connexion pour son montage sur un balai d'essuyage 20.

Comme représenté sur les figures 17 à 19, la collerette anti-rotation 16 vient se fixer au niveau du dispositif de connexion 22 de la monture 27 du balai d'essuyage. Pour cela, le dispositif de connexion 22 comprend deux ouvertures latérales 25 qui viennent en vis-à-vis des extensions 19 de la collerette anti-rotation 16, permettant ainsi de fixer cette dernière soit par clippage, soit par vissage, ou par toute autre solution mécanique ou par collage. La collerette anti-rotation 16 comprend une ouverture centrale de forme identique à celle de l'ouverture du dispositif de connexion 22 de la monture, ou de surface plus grande, qui vient en superposition avec cette ouverture du dispositif de connexion 22.

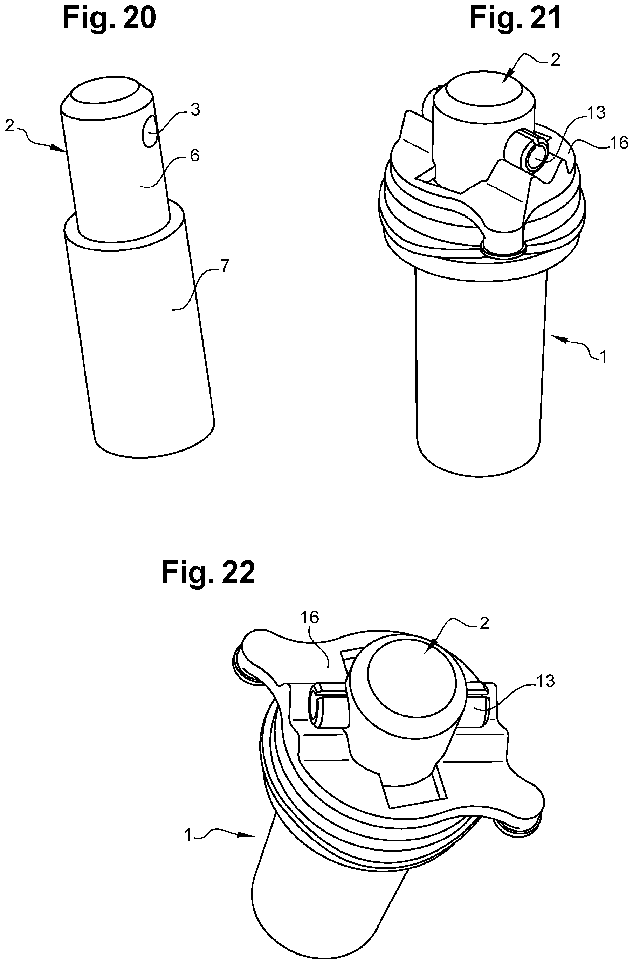

Grâce à l'utilisation de cet élément supplémentaire, la collerette anti-rotation 16, l'arbre 1 du système d'essuyage, particulièrement visible sur la figure 20, présente une forme simplifiée par rapport à celle de l'arbre 1 du premier mode de réalisation. Notamment, les trois premières portions de cet arbre 1 sont remplacées par une unique portion cylindrique 6, comprenant l'ouverture cylindrique 3 de réception d'une goupille 13. Le même moyen élastique, notamment les trois rondelles 14, 15, 14 susmentionnées, peuvent être positionnées autour de l'arbre 1 comme dans le premier mode de réalisation.

Le dispositif de connexion 22 du balai d'essuyage 20 est de même simplifié. Il ne comprend plus les protubérances 24 puisque l'arbre 1 ne comprend plus de cannelures 4. Il comprend une partie centrale sensiblement circulaire, de diamètre légèrement supérieur à celui de la portion cylindrique 6 de l'arbre 1, et deux portions élargies 23, de forme correspondant à celle de la goupille 13. Le balai d'essuyage est ainsi monté sur l'arbre, puis tourné d'un quart de tour de sorte à positionner les logements 17 de la collerette anti-rotation 16 sous les extrémités de la goupille 13. Lorsque le balai d'essuyage 20 est relâché, ces logements 17 viennent coopérer avec la goupille 13, cet agencement étant maintenu fermement sous l'effet du moye élastique 15. Par ce biais, le balai d'essuyage ne peut ni échapper à l'arbre 1, ni tourner autour de cet arbre 1. Les figures 21 et 22 illustrent plus précisément le positionnement relatif de la collerette anti-rotation 16 et de l'arbre 1, notamment la goupille 13. Il apparaît ainsi que la collerette anti-rotation participe non seulement à la fonction anti-rotation susmentionnée, mais aussi à la fonction de verrouillage du balai d'essuyage 20 en configuration de fonctionnement.

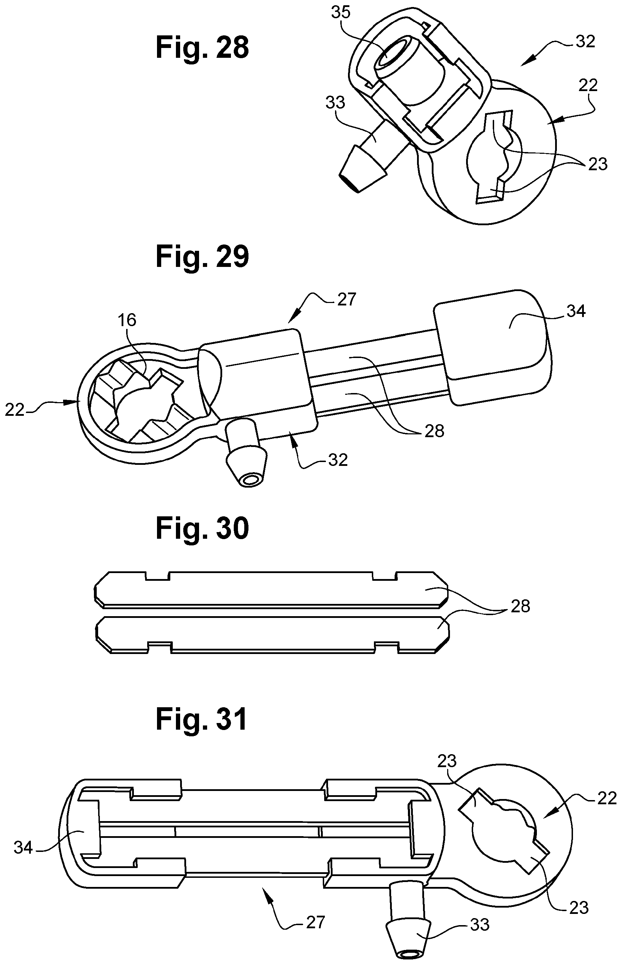

En variante non représentée du deuxième mode de réalisation, la collerette anti-rotation 16 pourrait ne pas être un élément distinct, mais venir d'une même pièce avec tout ou partie du balai d'essuyage, comme cela sera le cas dans la réalisation représentée par la figure 28.

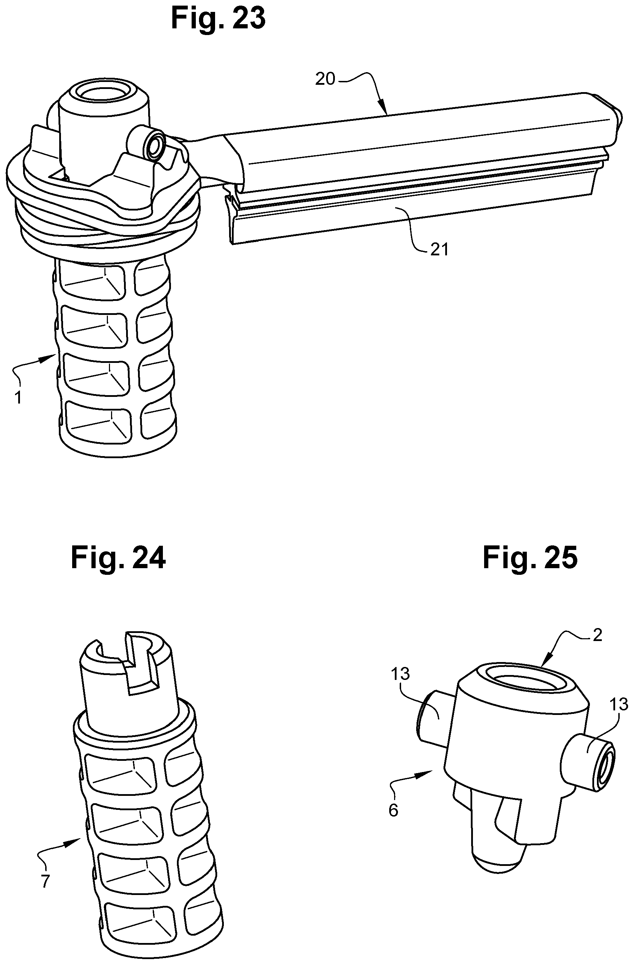

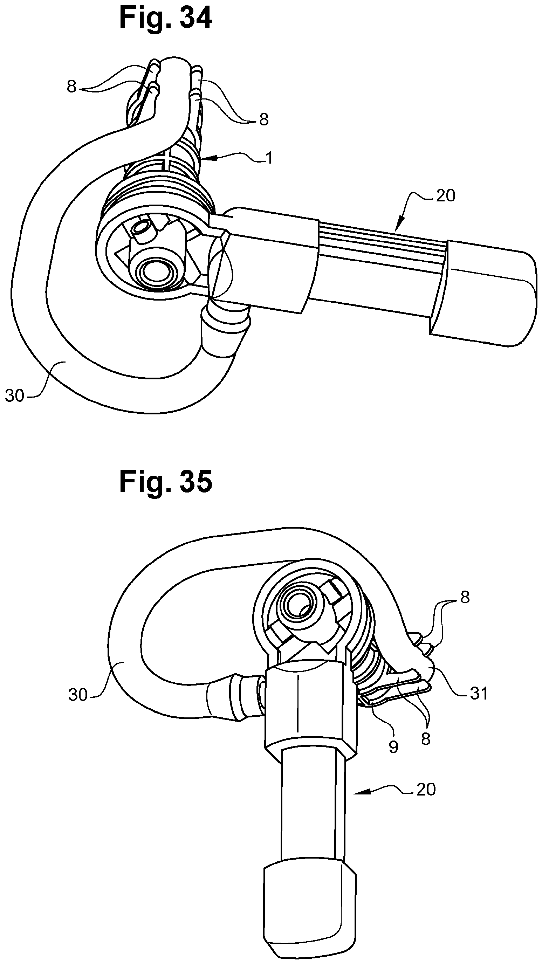

Les figures 23 à 35 illustrent un troisième mode de réalisation de l'invention.

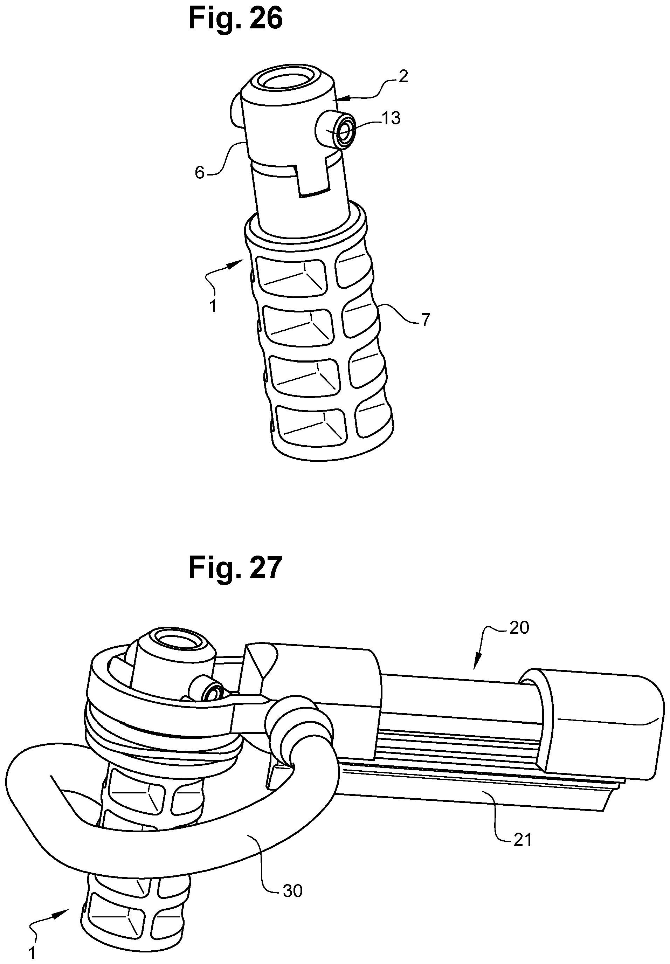

Comme illustré par les figures 24 à 26, ce troisième mode de réalisation diffère des deux précédents en ce que l'arbre 1 se présentent sous la forme de deux composants principaux distincts et fixés l'un à l'autre. L'axe bas 7 est simplifié, ajouré, comme représenté par la figure 24. L'axe haut 6, représenté par la figure 25, comprend une connectique permettant de coopérer avec l'axe bas 7, pour une fixation par exemple par soudage, pour former un arbre 1 résultant, représenté sur la figure 26, de forme globale similaire à l'arbre du deuxième mode de réalisation. Dans cette réalisation, la goupille 13 n'est plus un élément indépendant mais peut former une même pièce avec l'axe haut. En effet, il est ainsi possible de monter le moyen élastique, notamment les trois rondelles 14, 15, 14 susmentionnées sur l'axe bas 7, avant la fixation de l'axe haut 6, venant ainsi solidariser le moyen élastique et finaliser l'arbre 1.

Les figures 27 à 35 illustrent une variante du troisième mode de réalisation, dans laquelle le balai d'essuyage intègre un dispositif de distribution d'un liquide de nettoyage. Pour cela, le système d'essuyage comprend un tuyau 30 pour l'alimentation du balai d'essuyage 20 en liquide de nettoyage.

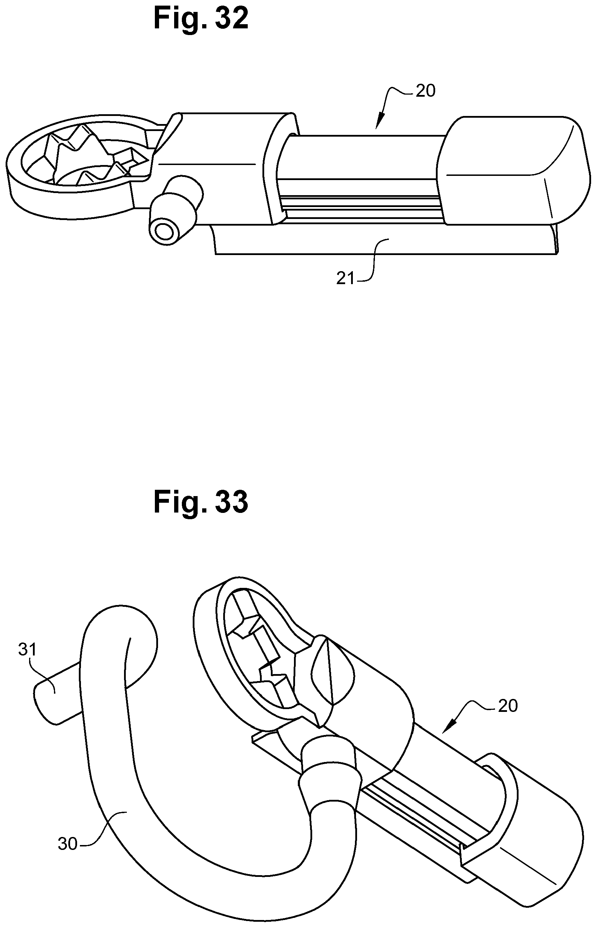

Les figures 28 à 31 illustrent ainsi la monture 27 du balai d'essuyage 20. Elle comprend un premier embout 32 comprenant le dispositif de connexion 22 pour l'arbre 1, puis une portion d'arrivée en liquide de nettoyage, comprenant un connecteur d'entrée 33, puis une sortie 35 permettant l'orientation du liquide de nettoyage vers l'élément d'essuyage 21, puis la surface à essuyer. Deux lames 28 parallèles peuvent être fixées dans ce premier embout 32. Un deuxième embout 34 vient se positionner à l'extrémité opposée desdites deux lames 28, pour former la monture 27 visible sur les figures 29 et 31. Un élément d'essuyage 21 est alors fixé à cette monture 27, pour former le balai d'essuyage 20 représenté en figure 32. Un tuyau 30 courbé, pour épouser la forme de l'arbre 1, représenté sur la figure 33, comprend une extrémité fixée au connecteur d'entrée 33, puis une deuxième extrémité 31 destinée à une liaison avec un dispositif d'alimentation en liquide de nettoyage, non représentée.

L'arbre 1 comprend des pattes 8 au niveau de sa deuxième extrémité 9, pour le clippage du tuyau 30 au niveau de sa deuxième extrémité 31, où il prend une forme rectiligne parallèle à l'arbre 1, pour minimiser l'encombrement global augmenté par le tuyau 30.

Finalement, l'invention ne se limite pas aux modes de réalisation décrits. Ces derniers peuvent notamment être combinés entre eux.

Dans tous les modes de réalisation, la monture 27 peut être en métal, voire en plastique rigide. L'élément d'essuyage 21 est de préférence en caoutchouc, de manière connue. La collerette peut être en plastique ou en métal. L'arbre 1 est de préférence en métal.

En complément, différents éléments du système d'essuyage peuvent prendre d'autres formes sans échapper au concept de l'invention. Par exemple, tout autre moyen élastique pourrait être utilisé, comprenant par exemple au moins un ressort, notamment hélicoïdal ou à lame. En variante, le moyen élastique pourrait être monté sur le balai d'essuyage 20, au niveau de son dispositif de connexion 22, et non sur l'arbre. L'arbre 1 d'entrainement et le balai d'essuyage 20 peuvent prendre des formes différentes. Par exemple, la goupille de l'arbre 1 pourrait prendre toute autre forme permettant de former une butée pour le balai d'essuyage 20 en configuration de fonctionnement. Dans les modes de réalisation, la goupille forme deux butées symétriquement opposées autour de l'axe de l'arbre, pour garantir la stabilité de la configuration de fonctionnement. L'arbre pourrait en variante comprendre plus de deux butées, par exemple trois ou quatre butées, réparties autour de son axe. L'arbre présente avantageusement une symétrie autour de son axe, qui représente aussi son axe de rotation. Le dispositif anti-rotation peut aussi prendre toute autre forme que celles représentés : il comprend des moyens anti-rotation complémentaires agencés sur l'arbre 1 d'entrainement et sur le balai d'essuyage 20. Le dispositif anti-rotation peut être indépendant du moyen de verrouillage du balai ou confondu avec celui-ci. Le premier mode de réalisation utilise des cannelures réparties régulièrement autour de l'arbre. En variante, toute encoche usinée dans l'arbre pourrait être utilisée.

La connexion de l'arbre 1 d'entrainement et du balai d'essuyage 20 peut aussi être différente, dès lors qu'elle permet leur montage amovible impliquant une simple rotation relative, et mettant en jeu un dispositif anti-rotation et un dispositif de verrouillage, avec la participation d'un moyen élastique. Dans les modes de réalisation décrits, le balai d'essuyage comprend ainsi un dispositif de connexion femelle, et l'arbre 1 un dispositif de connexion complémentaire mâle. Ces parties femelle/mâle pourraient être inversées. Dans tous les cas, le balai d'essuyage 20, ou plus simplement une sous-partie comme une monture 27, voire une sous-partie 32 de la monture 27, comprend un dispositif de connexion 22 apte à une connexion amovible avec un arbre 1 d'entrainement du balai d'essuyage 20, ce dispositif de connexion 22 comprenant une première orientation qui permet le montage/démontage relativement à un arbre 1 d'entrainement, et une deuxième orientation qui ne permet pas ce montage/démontage.

L'invention est particulièrement adaptée pour l'essuyage des petites surfaces actives des caméras ou dispositifs d'éclairage, notamment pour véhicule automobile. Elle reste toutefois compatible avec toute autre application nécessitant le nettoyage d'une surface.

## Revendications

1. Balai d'essuyage (20) pour système d'essuyage, notamment pour essuyer une caméra d'un véhicule automobile, comprenant un dispositif de connexion (22) apte à une connexion amovible avec un arbre (1) d'entrainement du balai d'essuyage (20), ce dispositif de connexion (22) comprenant une première orientation qui permet le montage/démontage relativement à un arbre (1) d'entrainement, et une deuxième orientation qui ne permet pas ce montage/démontage, **caractérisé en ce que** le dispositif de connexion (22) comprend une ouverture au niveau d'une extrémité du balai d'essuyage (20), comprenant au moins deux portions élargies (23) pour son montage et démontage.

2. Balai d'essuyage (20) pour système d'essuyage selon l'une des revendications précédentes, **caractérisé en ce qu'**il comprend un moyen anti-rotation, notamment par au moins une protubérance (24) au niveau d'une ouverture de son dispositif de connexion (22) ou par une collerette (16) comprenant au moins un logement (19) pour coopérer avec au moins une butée d'un arbre (1) d'entrainement.

3. Balai d'essuyage (20) pour système d'essuyage selon l'une des revendications précédentes, **caractérisé en ce qu'**il comprend une monture (27) formant des glissières pour la fixation amovible par translation d'un élément d'essuyage (21) destiné à venir en contact avec la surface à essuyer.

4. Système d'essuyage, **caractérisé en ce qu'**il comprend un arbre (1) d'entrainement et un balai d'essuyage (20) selon l'une des revendications précédentes fixé de manière amovible sur cet arbre (1) d'entrainement.

5. Système d'essuyage selon la revendication précédente, **caractérisé en ce qu'**il comprend une configuration de fonctionnement dans laquelle un moyen élastique (15) exerce une force sur le balai d'essuyage (20) tendant à le maintenir en butée contre au moins une butée de l'arbre (1) d'entrainement, notamment une goupille (13), pour verrouiller le balai d'essuyage (20) dans cette configuration de fonctionnement.

6. Système d'essuyage selon l'une des revendications 4 ou 5, **caractérisé en ce que** le balai d'essuyage (20) et l'arbre (1) d'entrainement comprennent des dispositifs de connexion (22, 2) respectifs configurés pour permettre leur montage et/ou démontage par leur actionnement successivement selon un premier mouvement de translation relatif parallèlement à l'axe de l'arbre (1) d'entrainement puis selon un deuxième mouvement de rotation relatif d'axe de rotation correspondant à l'axe de l'arbre (1) d'entrainement.

7. Système d'essuyage selon l'une des revendications 5 ou 6, **caractérisé en ce que** le balai d'essuyage (20) et l'arbre (1) d'entrainement comprennent des moyens anti-rotation respectifs configurés pour former un dispositif anti-rotation du balai d'essuyage (20) relativement à l'arbre (1) d'entrainement dans ladite configuration de fonctionnement.

8. Système d'essuyage selon la revendication précédente, **caractérisé en ce que** l'arbre d'entrainement (1) comprend une première portion avec des cannelures (4) formant un moyen anti-rotation, et **en ce que** le balai d'essuyage comprend une ouverture avec des protubérances (24) de format correspondant aux cannelures, configurées pour se loger dans les cannelures (4) dans ladite configuration de fonctionnement du système d'essuyage et former un dispositif anti-rotation.

9. Système d'essuyage selon la revendication 7, **caractérisé en ce que** l'arbre d'entrainement (1) comprend une goupille (13) formant un moyen anti-rotation et une butée de verrouillage, et **en ce que** le balai d'essuyage (20) comprend une collerette anti-rotation (16) comprenant des logements (19) configurés pour coopérer avec la goupille (13) dans ladite configuration de fonctionnement du système d'essuyage, formant ainsi un moyen anti-rotation et un moyen de verrouillage du balai d'essuyage (20) sur l'arbre (1) d'entrainement.

10. Système d'essuyage selon l'une des revendications 5 à 9, **caractérisé en ce que** le moyen élastique comprend une rondelle élastique (15), notamment disposée entre deux rondelles plates (14).

11. Caméra ou dispositif d'éclairage pour véhicule automobile, **caractérisé en ce qu'**elle comprend au moins un système d'essuyage selon l'une des revendications 4 à 10.

12. Véhicule automobile, de préférence un véhicule automobile autonome, **caractérisé en ce qu'**il comprend au moins un système d'essuyage selon l'une des revendications 4 à 10, ou une caméra ou dispositif d'éclairage selon la revendication 11.

## Patentansprüche

1. Wischerblatt (20) für ein Wischersystem, insbesondere zum Wischen einer Kamera eines Kraftfahrzeugs, welches eine Verbindungsvorrichtung (22) umfasst, die für eine lösbare Verbindung mit einer Antriebswelle (1) des Wischerblatts (20) geeignet ist, wobei diese Verbindungsvorrichtung (22) eine erste Ausrichtung, welche die Montage/Demontage bezüglich einer Antriebswelle (1) ermöglicht, und eine zweite Ausrichtung, welche diese Montage/Demontage nicht ermöglicht, aufweist, **dadurch gekennzeichnet, dass** die Verbindungsvorrichtung (22) eine Öffnung an einem Ende des Wischerblatts (20) umfasst, die mindestens zwei verbreiterte Abschnitte (23) für ihre Montage und Demontage umfasst.

2. Wischerblatt (20) für ein Wischersystem nach einem der vorhergehenden Ansprüche, **dadurch gekennzeichnet, dass** es ein Verdrehsicherungsmittel umfasst, insbesondere durch mindestens einen Vorsprung (24) an einer Öffnung seiner Verbindungsvorrichtung (22) oder durch einen Flansch (16), der mindestens eine Aufnahme (19) zum Zusammenwirken mit mindestens einem Anschlag einer Antriebswelle (1) umfasst.

3. Wischerblatt (20) für ein Wischersystem nach einem der vorhergehenden Ansprüche, **dadurch gekennzeichnet, dass** es eine Halterung (27) umfasst, die Gleitführungen zur lösbaren Befestigung eines Wischelements (21) durch Verschiebung bildet, das dazu bestimmt ist, mit der zu wischenden Fläche in Kontakt zu kommen.

4. Wischersystem, **dadurch gekennzeichnet, dass** es eine Antriebswelle (1) und ein Wischerblatt (20) nach einem der vorhergehenden Ansprüche, das lösbar an dieser Antriebswelle (1) befestigt ist, umfasst.

5. Wischersystem nach dem vorhergehenden Anspruch, **dadurch gekennzeichnet, dass** es eine Betriebskonfiguration aufweist, in der ein elastisches Mittel (15) eine Kraft auf das Wischerblatt (20) ausübt, die bestrebt ist, es an mindestens einem Anschlag der Antriebswelle (1), insbesondere einem Zapfen (13), in Anlage zu halten, um das Wischerblatt (20) in dieser Betriebskonfiguration zu verriegeln.

6. Wischersystem nach einem der Ansprüche 4 oder 5, **dadurch gekennzeichnet, dass** das Wischerblatt (20) und die Antriebswelle (1) jeweilige Verbindungsvorrichtungen (22, 2) umfassen, die dafür ausgelegt sind, ihre Montage und/oder Demontage durch ihre Betätigung nacheinander gemäß einer ersten relativen Translationsbewegung parallel zur Achse der Antriebswelle (1) und danach gemäß einer zweiten relativen Rotationsbewegung um die Achse der Antriebswelle (1) zu ermöglichen.

7. Wischersystem nach einem der Ansprüche 5 oder 6, **dadurch gekennzeichnet, dass** das Wischerblatt (20) und die Antriebswelle (1) jeweilige Verdrehsicherungsmittel umfassen, die dafür ausgelegt sind, eine Verdrehsicherungsvorrichtung des Wischerblatts (20) in Bezug auf die Antriebswelle (1) in der Betriebskonfiguration zu bilden.

8. Wischersystem nach dem vorhergehenden Anspruch, **dadurch gekennzeichnet, dass** die Antriebswelle (1) einen ersten Abschnitt mit Längsnuten (4) umfasst, die ein Verdrehsicherungsmittel bilden, und dadurch, dass das Wischerblatt eine Öffnung mit Vorsprüngen (24) mit einem den Längsnuten entsprechenden Format umfasst, die dafür ausgelegt sind, in der Betriebskonfiguration des Wischersystems in den Längsnuten (4) aufgenommen zu werden und eine Verdrehsicherungsvorrichtung zu bilden.

9. Wischersystem nach Anspruch 7, **dadurch gekennzeichnet, dass** die Antriebswelle (1) einen Zapfen (13) umfasst, der ein Verdrehsicherungsmittel und einen Verriegelungsanschlag bildet, und dadurch, dass das Wischerblatt (20) einen Verdrehsicherungsflansch (16) umfasst, der Aufnahmen (19) umfasst, die dafür ausgelegt sind, in der Betriebskonfiguration des Wischersystems mit dem Zapfen (13) zusammenzuwirken, und der somit ein Verdrehsicherungsmittel und ein Verriegelungsmittel des Wischerblatts (20) auf der Antriebswelle (1) bildet.

10. Wischersystem nach einem der Ansprüche 5 bis 9, **dadurch gekennzeichnet, dass** das elastische Mittel eine Federscheibe (15) umfasst, die insbesondere zwischen zwei Unterlegscheiben (14) angeordnet ist.

11. Kamera oder Beleuchtungsvorrichtung für ein Kraftfahrzeug, **dadurch gekennzeichnet, dass** sie mindestens ein Wischersystem nach einem der Ansprüche 4 bis 10 umfasst.

12. Kraftfahrzeug, vorzugsweise autonomes Kraftfahrzeug, **dadurch gekennzeichnet, dass** es mindestens ein Wischersystem nach einem der Ansprüche 4 bis 10 oder eine Kamera oder eine Beleuchtungsvorrichtung nach Anspruch 11 umfasst.

## Claims

1. Wiper blade (20) for a wiping system, in particular for wiping a camera of a motor vehicle, comprising a connection device (22) suitable for releasable connection to a drive shaft (1) of the wiper blade (20), said connection device (22) comprising a first orientation which allows mounting/dismounting relative to a drive shaft (1), and a second orientation which does not allow such mounting/dismounting, **characterized in that** the connection device (22) comprises an opening at one end of the wiper blade (20), comprising at least two enlarged portions (23) for mounting and dismounting of the latter.

2. Wiper blade (20) for a wiping system according to one of the preceding claims, **characterized in that** it comprises an anti-rotation means, in particular by at least one protrusion (24) at an opening of its connection device (22) or by a collar (16) comprising at least one housing (19) for cooperating with at least one stop of a drive shaft (1).

3. Wiper blade (20) for a wiping system according to one of the preceding claims, **characterized in that** the wiper blade comprises a mount (27) forming guides for the releasable translational attachment of a wiping element (21) intended to come into contact with the surface to be wiped.

4. Wiping system, **characterized in that** it comprises a drive shaft (1) and a wiper blade (20) according to one of the preceding claims, said blade being releasably attached to this drive shaft (1).

5. Wiping system according to the preceding claim, **characterized in that** it comprises an operating configuration in which a resilient means (15) exerts a force on the wiper blade (20) tending to hold it in abutment against at least one stop of the drive shaft (1), in particular a pin (13), to lock the wiper blade (20) in this operating configuration.

6. Wiping system according to one of Claims 4 or 5, **characterized in that** the wiper blade (20) and the drive shaft (1) comprise respective connection devices (22, 2) configured to allow their assembly and/or disassembly by their successive actuation according to a first relative movement in translation parallel to the axis of the drive shaft (1) then a second rotational movement relative to the axis of rotation corresponding to the axis of the drive shaft (1).

7. Wiping system according to one of Claims 5 or 6, **characterized in that** the wiper blade (20) and the drive shaft (1) comprise respective anti-rotation means configured to form an anti-rotation device for the wiper blade (20) relative to the drive shaft (1) in said operating configuration.

8. Wiping system according to the preceding claim, **characterized in that** the drive shaft (1) comprises a first portion with grooves (4) forming an anti-rotation means, and **in that** the wiper blade comprises an opening with protrusions (24) of a size corresponding to the grooves, configured to fit into the grooves (4) in said operating configuration of the wiping system and to form an anti-rotation device.

9. Wiping system according to Claim 7, **characterized in that** the drive shaft (1) comprises a pin (13) forming an anti-rotation means and a locking stop, and **in that** the wiper blade (20) comprises an anti-rotation collar (16) comprising recesses (19) configured to co-operate with the pin (13) in said operating configuration of the wiping system, thereby forming an anti-rotation means and a means for locking the wiper blade (20) to the drive shaft (1).

10. Wiping system according to one of Claims 5 to 9, **characterized in that** the resilient means comprises a resilient washer (15), in particular arranged between two flat washers (14).

11. Camera or lighting device for a motor vehicle, **characterized in that** it comprises at least one wiping system according to one of Claims 4 to 10.

12. Motor vehicle, preferably an autonomous motor vehicle, **characterized in that** it comprises at least one wiping system according to one of Claims 4 to 10 or a camera or lighting device according to Claim 11.
